(19) Europäisches Patentamt

European Patent Office

Office européen des brevets

(11) Numéro de publication : **0 452 198 A1**

# (12) DEMANDE DE BREVET EUROPEEN

(21) Numéro de dépôt : 91400923.8

(22) Date de dépôt : 05.04.91

(51) Int. Cl.⁵ : **A01B 29/04, A01B 27/00, A01B 39/08**

(30) Priorité : 10.04.90 FR 9004594

(43) Date de publication de la demande :
16.10.91 Bulletin 91/42

(84) Etats contractants désignés :
AT BE CH DE DK ES FR GB GR IT LI LU NL SE

(71) Demandeur : **MAFROCO SARL**
**7, rue des Tilleuls**
**F-51130 Pierre Morains (FR)**

(72) Inventeur : **Courcy, Patrick**
**7 rue des Tilleuls**
**F-51130 Pierre Morains (FR)**

(74) Mandataire : **Gérardin, Robert Jean René**
**PROT'INNOV INTERNATIONAL SA 18 et 18bis,**
**rue de Bellefond BP 328-09**
**F-75428 Paris Cèdex 09 (FR)**

(54) **Rouleau émotteur et tasseur pour l'agriculture.**

(57)     L'invention concerne un rouleau émotteur et tasseur, destiné, en agriculture, à la préparation du lit d'ensemencement.

Ce rouleau comporte de petits disques (10) et de grands disques (20), ou décrotteurs, régulièrement répartis sur un arbre de rotation (3) fixé en travers d'un châssis (4) par l'intermédiaire d'un moyeu (11) ou (21), avec interposition d'une bague antifriction et d'espacement (12) ou (22) et de rondelles (5) ; les disques sont constitués, chacun, de deux flasques identiques (13) ou (23), avec dents (14) ou (24) galbées vers l'axe du disque, inclinées transversalement selon un angle alpha, par rapport à un plan radial passant par le milieu de la corde de profil de chaque dent. Les grands disques (20) sont retenus prisonniers sur leur moyeu (21) par l'intermédiaire de joues circulaires (25) assurant leur libre débattement radial par rapport à leur moyeu (21), alors que les petits disques (10) sont fixés directement sur leur moyeu (11).

Application : agriculture

EP 0 452 198 A1

FIG.1

L'invention concerne un rouleau émotteur et tasseur, destiné, en agriculture, à la préparation du lit d'ensemencement après passage d'une herse rotative ou d'un outil à dents.

Les rouleaux agricoles de compactage sont bien connus. Ils sont essentiellement constitués d'un châssis support, sous lequel est monté, transversalement, un rouleau qui assure le contrôle de la profondeur de travail de l'outil à dents tout en assurant l'émottage et le tassement de la terre.

Différentes sortes de rouleaux existent actuellement et ont été conçus pour résoudre, chacun, certains problèmes spécifiques, liés à la nature et à l'état du sol, mais qui ont tous pour but de contrôler la profondeur de travail des outils à dents et d'assurer l'émottage et le tassement de la terre.

On peut ainsi citer:

– les rouleaux dits "packer", constitués d'un rouleau plein à la périphérie duquel des dents ont été régulièrement réparties, qui ont été principalement conçus pour travailler sur une terre consistante mais qui présentent l'inconvénient de lisser le sol et de creuser des saillies au niveau des dents, de se recouvrir rapidement d'une couche de terre nécessitant un effort de décrottage important, n'empêchant cependant pas certains blocages du rouleau dans des conditions extrêmes, d'où un très mauvais coefficient de roulement se traduisant par une surconsommation d'énergie particulièrement importante lors des blocages du rouleau, et d'abandonner sur le sol des plaques de terre résultant du décrottage.

– les rouleaux à spires, de section carrée, en losange ou autres, plus roulants par temps frais et par temps sec, mais qui présentent l'inconvénient de laisser subsister des parties non travaillées importantes, en déplaçant la terre, de créer des andains relativement importants et de nécessiter un décrottoir.

– les rouleaux à tubes, droits ou vrillés, de diverses sections, qui ont un très bon coefficient de roulement mais qui n'offrent qu'une efficacité moyenne.

Tous ces rouleaux sont des matériels dégrossisseurs de masse assez élevée, qui sont plus appropriés au tassement et au contrôle de profondeur qu'à l'émottage qu'ils n'assurent que très irrégulièrement.

Aussi, une autre famille de rouleaux est-elle apparue au cours des années 1970, destinée à la consolidation des terrains agricoles et à l'émottage. Ces rouleaux, constitués de plusieurs disques dentés disposés verticalement les uns contre les autres sur un arbre commun, visent à obtenir une meilleure fragmentation des mottes. Cependant, étant donné leur bande de roulement assez large, ces disques, bien qu'étoilés, ne pénètrent pas dans le sol suffisamment profondément pour assurer une préparation correcte du lit de semence. Aussi, ces matériels ont-ils évolués dans le sens de la réduction des couronnes de dents à une seule par disque, située à la périphérie d'une jante très inclinée facilitant la pénétration dans la terre meuble sans négliger le tassement, de façon à obtenir, par l'intermédiaire des dents, l'arrachement d'une couche superficielle de quelques centimètres d'épaisseur en dispersant, à la surface, une couche de fines petites mottes. On peut donc ainsi obtenir, en combinaison avec d'autres moyens aratoires, un lit de semence satisfaisant.

Toutefois, l'inconvénient principal de ces rouleaux à disques était, lorsque ceux-ci étaient associés à des combinés de labourage, amenant, à la surface, de la terre humide fraîchement travaillée, de se recouvrir progressivement d'une bande de plus en plus épaisse de terre, comblant progressivement les espaces interdisques et constituant même des bourrelets susceptibles d'imprimer, dans la couche supérieure du lit de semence, des sillons assez profonds qui restent ouverts et qui constituent des sortes de coquilles qui dessèchent ensuite à l'air et perturbent la pousse du semis

Pour remédier à ce problème, certains fabricants ont, par analogie avec ce qui existait déjà sur les rouleaux cambridge ou les rouleaux à vis (brevet allemand DT-AS-1.178.630), interposés, entre les disques, un disque intermédiaire, de plus grand diamètre, ayant un certain degré de liberté radiale, déterminé de façon à obtenir, en fonctionnement, un débattement radial suffisant pour obtenir un décrottage permanent de l'intervalle interdisques. Toutefois, ce perfectionnement, bien qu'améliorant considérablement l'efficacité des rouleaux à disques, n'élimine pas, cependant, l'encrassement des dents des disques eux-mêmes; aussi, l'évolution technologique qui a suivi a-t-elle eu principalement pour but de s'affranchir de cet encrassement, au détriment, parfois, de la qualité du lit de semence et notamment de sa couche superficielle.

Par ailleurs, tous ces rouleaux sont constitués de disques moulés en fonte et il en résulte une masse très importante qui s'ajoute à celle du châssis. D'autre part, l'effet de compactage s'exerce à une certaine profondeur qui varie, non pas en fonction du rouleau, mais en fonction du sol, sans aucune possibilité d'auto-adaptation.

Un autre inconvénient non négligeable de cette sorte de rouleau apparaît lors du relevage et du transport. En effet, si l'on peut admettre qu'il existe des tracteurs de puissance suffisante pour relever un tel rouleau utilisé seul, il n'en existe guère, sauf à admettre une dépense et une consommation d'énergie excessive, qui permette le relevage d'un ensemble combiné d'une machine à dents suivie d'un tel rouleau à disques de fonte, notamment aux extrémités de la zone de travail, dans les virages, ou simplement lors des déplacements en dehors de la zone de travail.

De ce fait, l'utilisation de tels rouleaux à disques en fonte est-elle très limitée et réservée à des cas particuliers, ou alors l'opération de compactage et d'émottage est effectuée seule et on perd l'avantage d'une opération combinée.

Il résulte de ce qui précède que, la masse des rouleaux étant fixe, la seule adaptation possible consiste à rajouter des charges sans qu'il soit possible de réduire la masse de base et, par conséquent, d'adapter celle-ci à la nature et à l'état du sol, sans pour autant pouvoir utiliser un tracteur de puissance moyenne suffisamment léger pour ne pas laisser des empreintes profondes, délimitant une sorte de talus médian qui réduit la pénétration moyenne des disques dans le sol et se traduit par un tassement et un émottage très irrégulier; ce qui oblige la plupart du temps, à faire précéder le rouleau d'une herse, ou d'outils à dents, dont la mise en oeuvre et l'efficacité exigent un surcroît de dépense d'énergie, alors que cette dépense est déjà prohibitive, eu égard au strict besoin correspondant à la nature et à l'état du sol. Quant à l'émiettage des mottes et à la remontée de leurs fragments en surface, on imagine qu'ils ne sont, dans ces conditions, effectués que très imparfaitement.

La présente invention vise à remédier à ces inconvénients. Cette invention, telle qu'elle se caractérise, vise à réaliser un rouleau à disques, auto-décrotteur, très léger, dont la périphérie des disques soit munie de moyens limitant la pénétration dans le sol et assurant, à la fois, le tassement du fond du lit d'ensemencement, combiné à l'écrasement des mottes, et la remontée des fragments de mottes à la surface du lit d'ensemencement, ceci en adaptant la charge à la nature et à l'état du terrain, afin d'obtenir une profondeur de lit optimum, tout en réduisant, au strict minimum, la consommation d'énergie.

Le rouleau tasseur et émotteur pour la préparation du lit d'ensemencement, en agriculture, selon l'invention, est constitué essentiellement de disques dentés, montés sur un même arbre ; les dits disques étant de deux diamètres différents, répartis régulièrement sur toute la largeur du rouleau ; les disques du plus grand diamètre, dits décrotteurs, étant montés avec un jeu diamétral par rapport à l'arbre correspondant à la différence des diamètres existant entre les deux sortes de disques, se caractérise principalement en ce que les dents des disques sont disposées latéralement et régulièrement en quinconce de chaque côté du disque, parallèlement à l'axe de rotation de celui-ci, en ce que les disques de grand diamètre, ou décrotteurs, sont maintenus dans le plan médian transversal de leur moyeu par l'intermédiaire de deux joues circulaires, fixées perpendiculairement au dit moyeu, en ce que l'espacement entre les disques est obtenu par l'intermédiaire des bagues antifrictions débordantes et de rondelles métalliques, en ce que les disques sont réalisés à partir de deux flasques en tôle d'acier découpés, formés puis assemblés dos-à-dos après emboutissage pour galbage.

Les dents des disques sont constituées de languettes rectangulaires, galbées transversalement vers l'axe des disques, qui forment un angle obtus alpha, par rapport au plan radial R, passant par le milieu de la corde de profil P de chaque dent.

La flèche du galbe des dents correspond environ au tiers de la largeur de celles-ci.

L'angle obtus alpha, formé par la corde de profil P des dents par rapport au plan radial R, passant par le milieu de la dite corde de profil P, est de 90° à 125°; il est déterminé en fonction de la capacité auto-nettoyante et tassante des disques, selon la nature des terrains.

Les extrémités des dents sont situées dans un plan perpendiculaire à l'axe de rotation des disques passant par l'extrémité correspondante du moyeu.

La largeur des disques, dents comprises, est d'environ 150 mm.

Les disques présentent une différence de diamètre extérieur de 30 à 50mm et comportent, en fonction de leur diamètre, un nombre de dents permettant de conférer un sol travaillé, un impact en forme de damier représentant 30 à 50% de la surface travaillée.

La bague antifriction est du polyéthylène basse pression.

Les avantages obtenus grâce à cette invention consistent essentiellement en ceci que la masse du rouleau se trouve considérablement réduite, ce qui permet de l'adapter par lestage à tous types de sol et à toutes conditions, facilite son transport et sa mise en oeuvre et limite la consommation d'énergie ; les dents, étant donné leur forme, leur orientation et leur répartition, permettent, selon la nature et l'état du sol, d'obtenir un tassement efficace à la profondeur voulue, combiné à un éclatement des mottes, dont les particules sont ramenées à la surface du fait de l'angle d'attaque des dents et de leur galbe.

D'autres caractéristiques et avantages apparaîtront dans la description qui va suivre d'un rouleau à disques en tôle d'acier, réalisé selon l'invention, donné à titre d'exemple non limitatif au regard des dessins annexés sur lesquels :

- la figure 1 est une vue de face d'un ensemble de disques, situés à l'une des extrémités du rouleau, avec représentation en coupe des deux premiers disques,
- la figure 2 représente une vue d'un des côtés du petit disque, en service sur une terre labourée, avec représentation en trait mixte du disque décrotteur,
- la figure 3 représente une vue d'un des côtes du grand disque.

Les figures représentent un rouleau émotteur et tasseur selon l'invention dont les petits disques **10** et les grands disques **20** sont montés sur un arbre **3**, fixé en travers d'un châssis **4** par l'intermédiaire d'un moyeu 11 ou 21 avec interposition d'une bague antifriction et d'espacement 12 ou 22, et de rondelles 5 ; les dits disques étant respectivement constitués à partir de deux flasques identiques 13 ou 23, avec dents 14 ou 24, galbées vers l'axe du disque et inclinées transversalement selon un angle alpha par rapport à un plan radial R passant par le milieu de la corde de profil P de chaque dent; les grands disques 20 étant retenus prisonniers sur leur moyeu 21 par l'intermédiaire de joues circulaires 25 assurant un libre débattement radial tout en maintenant les disques dans le plan médian transversal du moyeu 21, contrairement aux petits disques qui sont rapportés par soudage dans le plan médian transversal de leur moyeu 11.

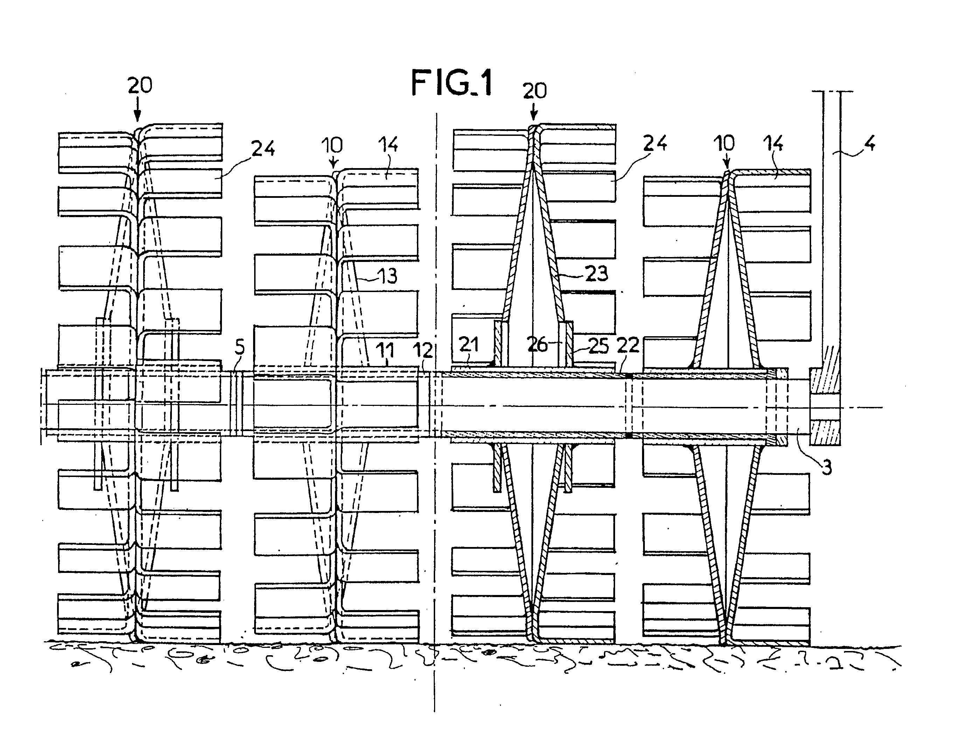

En examinant plus en détail la figure 1, on remarque que les petits disques 10 sont régulièrement répartis parmi les grands disques 20, selon un espacement déterminé par les bagues antifrictions débordantes 12 et les rondelles entretoises 5, contre les flasques desquelles l'extrémité des bagues vient frotter. Si les petits disques 10 sont ainsi maintenus axialement et radialement, il n'en est pas de même des grands disques 20, dits décrotteurs, dont le diamètre de l'alésage 26 est déterminé pour permettre un débattement radial correspondant à la différence des diamètres des deux modèles de disques 10, 20 ,afin que, lorsque le rouleau repose sur une surface plane, le bord de l'alésage 26 des grands disques vienne porter contre l'extérieur du moyeu 21, pour transmettre les efforts de tassement à l'arbre 3.

On remarquera aussi, sur la même figure 1, que les dents 14 ou 24 des disques 10 ou 20 sont disposées latéralement et en quinconce, parallèlement à l'axe de l'arbre 3, sur une longueur correspondant à celle du moyeu 11 ou 21 et que les flasques 13 ou 23 des disques ont été galbés selon une forme sensiblement conique, afin d'accroître le moment d'inertie transversal de l'ensemble.

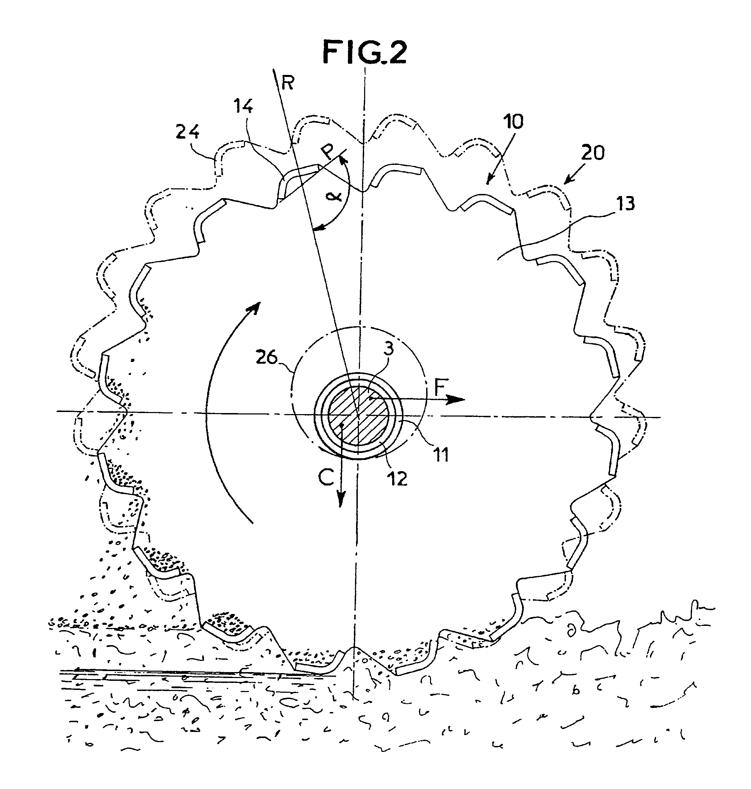

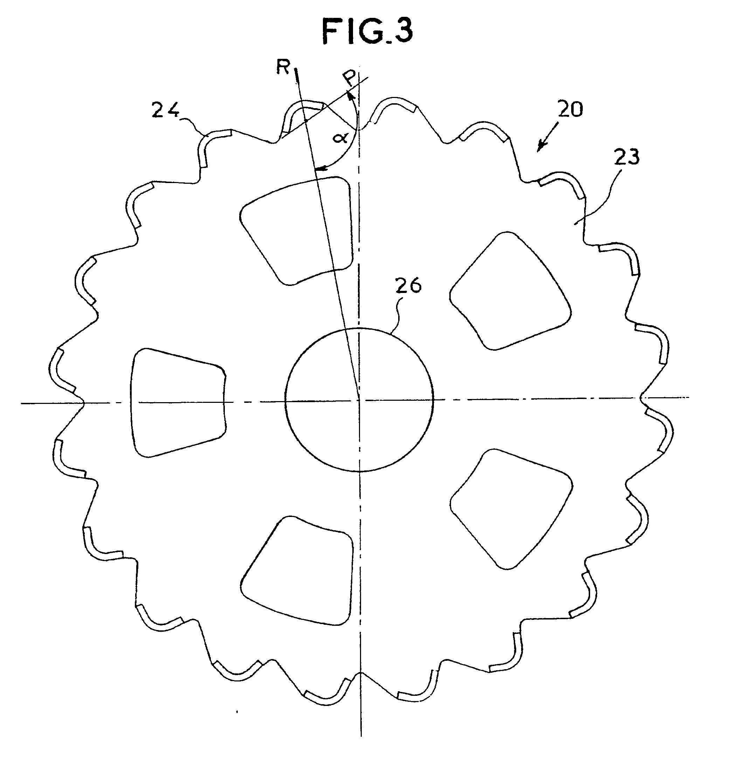

En examinant maintenant les figures 2 et 3 à la lumière des indications qui viennent d'être données ci-dessus, se rapportant notamment à la forme, à l'orientation et à la disposition des dents 14 ou 24 des disques, on remarque que, lorsque les disques 10 et 20 roulent sur la terre préalablement labourée, dans le sens de la flèche F, les dents 14 ou 24 pénètrent dans la terre, à une profondeur déterminée en fonction de la nature et de l'état du terrain et de la charge C appliquée sur l'arbre 3, où elles assurent l'écrasement des mottes, puis, compte-tenu de leur galbe et de leur angle d'attaque, assurent, comme avec les arbres d'une roue à aubes, la remontée des fragments de mottes, brisées par la ou les dents précédentes, pour en assurer le déversement progressif à la surface, au fur et à mesure que l'inclinaison des dents augmente sous l'effet de la rotation des disques.

A l'inverse, avec un sens de déplacement du rouleau opposé à celui de la flèche F, représentée sur la figure 2, l'angle d'attaque des dents 14 ou 24 sera inversé, ce qui permettra d'obtenir un tassement plus important et un déversement plus rapide des miettes de mottes dans le lit d'ensemencement; ce qui pourra présenter de l'intérêt pour certaines cultures en terre légère.

On obtient donc bien, ainsi, les avantages précédemment indiqués, à savoir un tassement régulier et adapté à la nature et à l'état du sol, une homogénéisation du lit d'ensemencement et la remontée en surface de fragments de mottes, c'est-à-dire un lit idéal, meuble en dessous, mais consolidé par le tassement, avec, au-dessus, une couche souple, de bonne capillarité, recouverte d'une couche très aérée de miettes de mottes.

## Revendications

1. Rouleau tasseur et émotteur pour la préparation du lit d'ensemencement en agriculture, constitué essentiellement de disques de deux diamètres différents, montés sur un même arbre et répartis régulièrement sur toute la largeur du rouleau ; les disques du plus grand diamètre, dits décrotteurs, étant montés sur l'arbre avec un jeu correspondant à la différence des diamètres existant entre les deux sortes de disques ; les dents des disques étant constituées de languettes rectangulaires, disposées latéralement et régulièrement de chaque côté des disques, parallèlement à l'axe de rotation de ceux-ci, et étant galbées transversalement vers l'axe de rotation des disques, caractérisé en ce que chaque disque comporte un moyeu (11 ou 21) à bague antifriction débordante (12 ou 22), en ce que les disques de grand diamètre, ou décrotteurs (20), sont maintenus dans le plan médian transversal de leur moyeu (21) par l'intermédiaire de deux joues circulaires (25), fixées perpendiculairement au dit moyeu, en ce que l'espacement entre les disques est obtenu par l'intermédiaire des bagues antifriction débordantes (12 et 22) et de rondelles métalliques (5), en ce que les disques (10,20) sont réalisés à partir de deux flasques (13 ou 23) en tôle d'acier découpés, formés puis assemblés dos-à-dos après emboutissage pour galbage, en ce que les dents (14,24) des disques (10,20) sont réparties en quinconce de chaque côté de ceux-ci, ont leur extrémité située dans un plan perpendiculaire à l'axe de rotation des disques(10,20) comprenant l'extrémité correspondante du moyeu (11,21), forment un angle obtu alpha par rapport au plan radial (R) passant par le milieu de leur corde de profil (P) et sont galbées selon une flèche correspondant environ au tiers de leur largeur.

2. Rouleau selon la revendication 1, caractérisé en ce que l'angle obtu alpha, formé par la corde de profil (P) des dents (14,24) par rapport au plan radial (R), passant par le milieu de la dite corde de profil (P), est de 90° à 125°.

3. Rouleau selon la revendication 1, caractérisé en ce que la largeur des disques (10, 20), moyeux (11, 21) et dents (14, 24) compris, est d'environ 150 mm.

4. Rouleau selon la revendication 1, caractérisé en ce que les disques (10, 20) présentent une différence de diamètres extérieurs de 30 à 50mm.

5. Rouleau selon la revendication 1, caractérisé en ce que les dents sont réparties en quinconce, et assure sur le sol travaillé un impact en forme de damier représentant 30 à 50% de la surface du sol travaillé.

6. Rouleau selon la revendication 1, caractérisé en ce que les bagues antifriction débordantes (12, 22) des moyeux (11, 21) sont en polyéthylène basse pression.

FIG.1

# FIG.2

# FIG.3

EP 0 452 198 A1

Office européen
des brevets

RAPPORT DE RECHERCHE EUROPEENNE

Numero de la demande

EP    91 40 0923

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-292 589 (F.GUTTLER) <br> * colonne 5, ligne 21 - colonne 7, ligne 3; figures 1,3 * | 1,2,4 | A01B29/04 <br> A01B27/00 <br> A01B39/08 |
| Y | FR-A-2 075 999 (E.ZINK) <br> * page 11, ligne 23 - page 12, ligne 25; figure 12 * | 1,2,4 | |
| A | US-A-3 338 315 (L.KETEL) <br> * colonne 1, ligne 62 - colonne 2, ligne 30; figures 1,2,6 * | 1 | |
| A | US-A-4 365 673 (A.T.FAULKNER) <br> * colonne 1, ligne 48 - colonne 2, ligne 35; figures 3,5 * | 1 | |
| A | FR-A-2 547 696 (GOURDIN-SOUPLEX) | | |
| A | US-A-2 543 377 (J.E.PROGNEAUX) | | |

DOMAINES TECHNIQUES RECHERCHES (Int. Cl.5)

A01B

Le présent rapport a été établi pour toutes les revendications

| Lieu de la recherche | Date d'achèvement de la recherche | Examinateur |
|---|---|---|
| LA HAYE | 18 JUILLET 1991 | WOHLRAPP R.G. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P0402)

10